# EUROPÄISCHE PATENTSCHRIFT

(11) **EP 0 361 112 B1**
(45) Veröffentlichungstag und Bekanntmachung des Hinweises auf die Patenterteilung: **07.04.1993**
(21) Anmeldenummer: 89115907.1
(22) Anmeldetag: 29.08.1989
(51) Int. Cl.: B01D 3/14

(54) **Kolonne zur Destillation von Einsatzprodukten, die im Sumpf zur Zweiphasenbildung neigen**
Column for the distillation of feeds having a two-phase tendency at the bottom
Colonne pour la distillation des charges, qui tendent à former une biphase à la base

(30) Priorität: 27.09.1988 DE 3832724
(43) Veröffentlichungstag der Anmeldung: 04.04.1990
(73) Patentinhaber: Krupp Koppers GmbH, 45143 Essen (DE)
(72) Erfinder: Rüdel, Ulrich, D-4200 Oberhausen 1 (DE)

(56) Entgegenhaltungen:
- US-A- 3 766 021
- US-A- 3 803 002
- US-A- 4 003 799

## Beschreibung

Die Erfindung betrifft eine durch einen Sumpfumlaufkocher beheizte Kolonne zur Destillation von Einsatzprodukten, die im Sumpf zur Zweiphasenbildung neigen.

Beim Betrieb von Kolonnen, die durch einen Sumpfumlaufkocher beheizt werden, treten in der Regel dann Schwierigkeiten auf, wenn das zu destillierende Einsatzprodukt im Sumpf der Kolonne zur Zweiphasenbildung neigt. Die dabei auftretende schwere Phase kann nämlich den für die Kolonnenbeheizung erforderlichen Flüssigkeitsumlauf zwischen dem Kolonnensumpf und dem Kocher zum Erliegen bringen oder zumindest ganz erheblich beeinträchtigen.

Zur Behebung dieser Schwierigkeiten ist bereits vorgeschlagen worden, mit Hilfe einer Pumpe einen Zwangskreislauf zwischen dem Kolonnensumpf und einem separaten Abscheidebehälter einzurichten. Hierbei wird die schwere Phase im Abscheidebehälter durch Schwerkraftabscheidung abgetrennt und nur die leichte Phase in den Kolonnensumpf zurückgepumpt. Durch einen Trennschichtregler kann dabei die Trennschicht zwischen der leichten und der schweren Phase konstant gehalten werden. Diese Methode ist jedoch nicht frei von Nachteilen, weil die Installation einer Pumpe für den Zwangsumlauf sowie eines separaten Abscheidebehälters zusätzliche Anlage- und Betriebskosten verursachen. Außerdem führt der Einsatz der Pumpe dazu, daß die Flüssigkeit vor dem Eintritt in den Abscheider durch die Pumpe gemixt wird. Die schwere Phase liegt dann nur noch in Form sehr kleiner Tröpfchen vor, wodurch deren nachfolgende Abscheidung natürlich beeinträchtigt wird.

Der Erfindung liegt deshalb die Aufgabe zugrunde, eine Kolonne zu schaffen, die insbesondere zur Destillation von Einsatzprodukten geeignet ist, die im Sumpf zur Zweiphasenbildung neigen und bei der die vorstehend geschilderten Schwierigkeiten vermieden werden.

Diese Aufgabe wird gelöst durch eine Kolonne der eingangs genannten Art, die erfindungsgemäß dadurch gekennzeichnet ist, daß im Unterteil der Kolonne ein flüssigkeitsundurchlässiger Sammelboden mit einem Ablaufschacht angeordnet ist, wobei sich der Flüssigkeitsabzug zum Sumpfumlaufkocher dicht unterhalb dieses Sammelbodens befindet und der Unterteil der Kolonne in einen Kolonnensumpf mündet, dessen Durchmesser kleiner als der Kolonnendurchmesser ist.

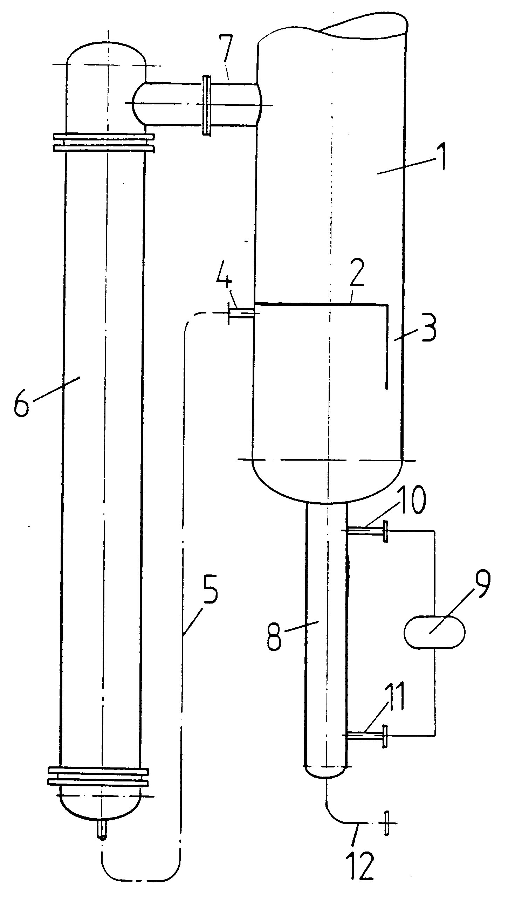

Weitere Einzelheiten der erfindungsgemäßen Kolonne ergeben sich aus den vorliegenden Unteransprüchen und sollen nachfolgend an Hand des in der Abbildung dargestellten Ausführungsbeispiels erläutert werden. Die Abbildung zeigt dabei in vereinfachter Form einen Schnitt durch den Unterteil der erfindungsgemäßen Kolonne mit dem dazugehörigen Sumpfumlaufkocher. Der obere Teil der Kolonne ist in der Abbildung nicht dargestellt, da er in der bisher üblichen Form ausgeführt wird und mit der Erfindung nichts zu tun hat.

Bei der in der Abbildung dargestellten Ausführungsform befindet sich im Unterteil der Kolonne 1 der flüssigkeitsundurchlässige Sammelboden 2, der an der rechten Seite abgewinkelt ist, so daß zwischen der Kolonnenwand und dem abgewinkelten Teil des Sammelbodens 2 der Ablaufschacht 3 gebildet wird. Dicht unterhalb des Sammelbodens 2 befindet sich der Flüssigkeitsabzug 4, durch den eine Teilmenge der im Kolonnesumpf befindlichen Flüssigkeit über die Leitung 5 zum Sumpfumlaufkocher 6 abgezogen wird. Während bei den bisher bekannten Konstruktionen dieser Flüssigkeitsabzug am unteren Ende der Kolonne vorgesehen war, ist er hier weiter oben angeordnet. Dadurch wird verhindert, daß schwere Phase in den Sumpfumlaufkocher 6 gelangen kann. Für die Kocherfunktion hat diese Verlegung des Flüssigkeitsabzuges jedoch keine negativen Auswirkungen, da die statischen Flüssigkeitssäulen unverändert bleiben. Selbstverständlich ist der Sumpfumlaufkocher 6 mit den notwendigen Einrichtungen zur Beheizung und zum Umlauf der Flüssigkeit versehen, die in der Abbildung jedoch nicht dargestellt sind. Die wiederaufgeheizte Flüssigkeit gelangt über den Stutzen 7, der oberhalb des Sammelbodens 2 angeordnet ist, in die Kolonne 1 zurück. Die von oben herabfließende Flüssigkeit wird dabei auf dem Sammelboden 2 aufgefangen und über den Ablaufschacht 3 in den Kolonnensumpf abgeleitet. Die Länge des Ablaufschachtes 3 wird dabei so bemessen, daß die Entfernung zwischen seinem unteren Ende und dem Flüssigkeitsabzug 4 so groß ist, daß auf dem Weg der Flüssigkeit vom unteren Ende des Ablaufschachtes 3 zum Flüssigkeitsabzug 4 die Tröpfchen der schweren Phase soweit nach unten gesunken sind, daß sie nicht mehr in den Flüssigkeitsabzug 4 gelangen können. Die abgesunkenen Tröpfchen der schweren Phase werden in dem verengten Kolonnensumpf 8 gesammelt. Diese Verengung dient dazu, eine gute Regelungsmöglichkeit für den dort installierten Trennschichtregler 9 zu schaffen. Dieser ist über die Anschlüsse 10 und 11 mit dem verengten Kolonnensumpf 8 verbunden. Grundsätzlich gilt hierbei die Regel, daß die Verengung des Kolonnensumpfes 8 gegenüber der übrigen Kolonne 1 umso stärker sein muß, je geringer der Anteil der schweren Phase in der Flüssigkeit ist. So kann beispielsweise der Durchmesser des Kolonnensumpfes 8 nur 1/5 des Durchmessers der übrigen Kolonne 1 betragen. Die sich im Unterteil des verengten Kolonnensumpfes 8 ansammelnde schwere Phase kann über die Leitung 12 aus der Kolonne abgezogen werden.

Wie bereits weiter oben festgestellt wurde, zeigt die Abbildung nur den für die Erfindung wesentlichen Unterteil der Kolonne 1. Im übrigen ist diese Kolonne bezüglich ihrer Ausgestaltungsmöglichkeiten völlig frei. Das heißt, sie kann mit beliebigen Einbauten und/oder Füllkörpern versehen sein und selbstverständlich die zu ihrem Betrieb erforderlichen Regel- und Kontrolleinrichtungen aufweisen.

Durch die erfindungsgemäße Konstruktion gelingt es, die schwere Phase innerhalb der Kolonne 1 abzuscheiden, so daß ein separater Abscheidebehälter nicht mehr erforderlich ist. Damit entfallen die hierbei auftretenden und weiter oben beschriebenen Nachteile. Da bei Anwendung der erfindungsgemäßen Konstruktion außerdem die in der Abbildung nicht dargestellten Pumpen für den Zwangsumlauf durch den Abscheidebehälter entfallen können, bzw. als Sumpfproduktpumpen wesentlich kleiner dimensioniert werden können, ergeben sich insgesamt gesehen durch die erfindungsgemäße Konstruktion nicht unerhebliche Einsparungen an Anlage- und Betriebskosten.

## Patentansprüche

1. Durch einen Sumpfumlaufkocher beheizte Kolonne zur Destillation von Einsatzprodukten, die im Sumpf zur Zweiphasenbildung neigen, dadurch gekennzeichnet, daß im Unterteil der Kolonne (1) ein flüssigkeitsundurchlässiger Sammelboden (2) mit einem Ablaufschacht (3) angeordnet ist, wobei sich der Flüssigkeitsabzug (4) zum Sumpfumlaufkocher (6) dicht unterhalb dieses Sammelbodens (2) befindet und der Unterteil der Kolonne in einen Kolonnensumpf (8) mündet, dessen Durchmesser kleiner als der Kolonnendurchmesser ist.

2. Kolonne nach Anspruch 1, dadurch gekennzeichnet, daß die Länge des Ablaufschachtes (3) so bemessen wird, daß die Entfernung zwischen seinem unteren Ende und dem Flüssigkeitsabzug (4) für eine Abscheidung der schweren Phase ausreicht.

3. Kolonne nach den Ansprüchen 1 und 2, dadurch gekennzeichnet, daß die Verengung des Kolonnensumpfes (8) umso größer ist, je geringer der Anteil der schweren Phase in der Flüssigkeit ist.

4. Kolonne nach den Ansprüchen 1 bis 3, dadurch gekennzeichnet, daß der Kolonnensumpf (8) mit einem Trennschichtregler (9) versehen ist.

## Claims

1. Column heated by a bottom reboiler for distilling feeds which tend to form two phases in the bottom, characterised in that a liquid-impermeable collecting tray (2) with a downcomer (3) is arranged in the lower part of the column (1), the liquid take-off (4) to the bottom reboiler (6) being located just below this collecting tray (2), and the lower part of the column leading into a column bottom (8) having a diameter smaller than the column diameter.

2. Column according to Claim 1, characterised in that length of the downcomer (3) is dimensioned such that the distance between its lower end and the liquid take-off (4) is sufficient for the heavy phase to separate out.

3. Column according to Claims 1 and 2, characterised in that the narrowing of the column bottom (8) is the greater, the smaller the proportion of the heavy phase in the liquid.

4. Column according to Claims 1 to 3, characterised in that the column bottom (8) is provided with an interface controller (9).

## Revendications

1. Colonne, chauffée par un rebouilleur destinée à la distillation de produits de charge qui tendent à se séparer en deux phases dans le fond,
caractérisée en ce qu'un plateau collecteur (2) imperméable aux liquides et muni d'un puisard d'écoulement (3) est agencé dans la partie inférieure de la colonne (1), l'extraction du liquide (4) vers le rebouilleur (6) se trouve juste au-dessous de ce plateau collecteur (2) et la partie inférieure de la colonne débouche dans un fond de colonne (8) dont le diamètre est inférieur au diamètre de la colonne.

2. Colonne selon la revendication 1,
caractérisée en ce que la longueur du puisard d'écoulement (3) est calculée de manière que la distance entre son extrémité inférieure et l'extraction de liquide (4) est suffisante pour assurer la séparation de la phase lourde.

3. Colonne selon les revendications 1 et 2,
caractérisée en ce que le rétrécissement du fond (8) de la colonne est d'autant plus accentué que la proportion de la phase lourde dans le liquide est plus petite.

4. Colonne selon les revendications 1 à 3,
caractérisée en ce que le fond (8) de la colonne est muni d'un régulateur d'interface (9).
